# EUROPEAN PATENT APPLICATION

(11) **EP 4 071 216 A1**
(43) Date of publication of application: **12.10.2022**
(21) Application number: 21315062.6
(22) Date of filing: 09.04.2021
(51) Int. Cl.: C08L 97/02, B27N 3/06

(54) **PROCESS FOR THE MANUFACTURE OF A LIGNOCELLULOSIC FIBRE-BASED COMPOSITE MATERIAL USING FORMULATED PLANT SEED PELLETS AND COMPOSITE MATERIAL OBTAINED BY SUCH PROCESS**

(71) Applicant: EVERTREE, 60280 Venette (FR)
(72) Inventor: The designation of the inventor has not yet been filed
(74) Representative: Santarelli

(57) **Abstract**

The present invention relates to a process for the manufacture of a lignocellulosic fibre-based composite material comprising the steps of:
• obtaining a fibrous mix (S1) comprising a defibrated lignocellulosic material and defibrated formulated plant seed pellets;
• blending the fibrous mix with a resin (S2) to form a composite mixture; and
• curing (S3) the composite mixture, thereby forming the lignocellulosic fibre-based composite material.

A preferred application of this process is the manufacture of fibreboards, such as MDF.

## Description

### Field of the Invention

The present invention relates to a process for the manufacture of a fibre-based composite material. The invention more particularly relates to a process for preparation of a fibre-based material comprising fibres bound by an adhesive comprising a protein source and a resin.

### Background of the Invention

In known manufacturing processes that utilize an adhesive that is or that comprises a resin, the adhesive portion will set from a liquid state to a solid state. The adhesive may set through loss of water into the air or into another portion of the composite, by a phase change, or by some chemical or physio-chemical change of the adhesive.

Adhesive compositions are used extensively in the wood products industry to make composites such as chipboard, fibreboard, and related composite wood products. Adhesive compositions are also used to make engineered lumber composites. Traditionally, these wood composites have been made using a urea formaldehyde (UF) resin or a phenol formaldehyde (PF) resin. More recently, polymeric methylenediphenyl diisocyanate (pMDI) has been used to make these composites. UF, PF and pMDI resins are made from petroleum feedstock and can require high temperature conditions to facilitate curing. For example, heating the resin-wood mixture to temperatures exceeding 100° C., and often 200° C., while exerting pressure on the mixture in order to form the composite.

Many adhesives in the composite industry, especially where biomaterials are used, are water-borne. In this situation, water serves as a primary component either to dissolve or disperse the adhesive components. For example, urea-formaldehyde (UF) adhesives are often provided in the form of a solution.

Manufacturing of fibreboards, such as medium-density fibreboards (MDF), is one of the main applications of the processes for manufacturing a fibre-based composite material. Medium-density fibreboard (MDF), and other types of fibreboards such as high density fibreboard (HDF), low density fibreboard (LDF) and ultra-low density -fibreboard (ULDF) are generally obtained from a lignocellulosic material, in particular wood, according to a process that may be summed up as follows.

The first step in the fibreboard (e.g., MDF, HDF, LDF or ULDF) process is wood handling which typically includes debarking, log breaking into chips and chip/bark handling systems. In this step, wood chips are separated from stones and other contaminations. The next step is the fibre preparation, which may include processing the wood chips in a chip washer, a steaming bin, a preheater and a defibrating apparatus such as a refiner or defibrator. In the steaming bin, wood chips are heated by steam to a temperature around 80-95 °C, and they are then conveyed by a plugscrew that squeezes water out of the chips before they enter the pre-heater. In the preheater the chips are heated to a temperature of around 160 °C which makes the fibres soft and easier to separate. The softened chips are then transported and introduced (usually through a screw) into the defibrator, where they are ground into fibres between two metal members (e.g., discs or plates) under a steam pressure up to 8 bar. The fibres flow with the steam out of the refiner into a so-called blow line where wood fibres are resinated, *i.e.* sprayed with a thermoset resin. The obtained fibres are dried with for example one or two dryer cyclones and a Z-Sifter. In the cyclones the fibres are dried with hot flue gas or steam to attain 5%-10% moisture content. The Z-Sifter cleans the fibres of contaminates before the forming stage. During the forming stage the resinated fibres are formed into a mat, which enters a cold pre-press before it goes into a hot press. The last stage is handling, where the fibreboards are cut to the desired dimensions, cooled down, and stacked before delivery.

Such a process and the industrial equipment that can be used to perform it are described for example in: Wood-Based Panels - An Introduction for Specialists, COST Office, 2010, Published by Brunel University Press, ISBN 978-1-902316-82-6, and by Halvarsson, S., Manufacture of straw MDF and fibreboard, Thesis for the degree of Doctor of technology, Sundsvall, 2010*.*

In certain known fibre-based materials, the wood fibres are replaced by other natural fibres, such as straw fibres (wheat, rice or corn fibre). For example, US5663221 discloses the use of sunflower husks to make MDF boards, as replacement of the wood fibre-based reinforcement. According to the process disclosed in this document, the raw material used undergoes steps similar to those used for making wood-based MDF. The process according to this document aims at decreasing the consumption of energy for the production of MDF boards, compared to the production of wood based boards.

WO00/06650 discloses composite materials obtained from vegetable materials containing fibres such as sunflower, rapeseed, and soybean, and a bonding agent. This document however relates to a thermoplastic process.

In some of the known processes for manufacturing a fibre-based composite, protein raw material such as soy is used. More particularly, protein sources, such as soy protein isolate or soy flour, are used in combination with the curing agent.

US630699 discloses a soybean-based adhesive resin comprising soybean flour and a crosslinking agent, namely a PF resin, and a method of making this adhesive. This method involves providing an aqueous solution of soybean flour (dispersion of flour in an aqueous liquid, typically water) and adding a cross-linking agent to the solution under conditions effective to cross-link the soybean flour so that an adhesive resin is formed. This adhesive can be used for the manufacture of fibreboards. More generally, there is disclosed a composite product which includes particulate plant material and the soybean-based adhesive resin.

Similarly, WO2009/048598 discloses an adhesive for lignocellulosic composite' comprising an aqueous mixture of protein, a polyamidoamine-epichlorohydrin (PAE) resin as crosslinker, and a non-urea diluent (a low volatility water-soluble compound that provides low viscosity in water).

Such processes that use an aqueous solution with a protein plant powder or flour dispersed in water with a resin are however water consuming and may lead to viscosity issues of the adhesive. They may also lead to process issues, in particular because an excessive amount of water may be brought on the fibres. This requires to perform additional drying to obtain the desired amount of water brought on the fibres before pressing. Such processes are also complex and not cost efficient, because the use of aqueous dispersion requires grinding the plant material and then mixing the plant powder with an aqueous liquid (such as water). Whether the dispersion is done directly on the production site of the composite material or purchased from a supplier, it is a costly product. When the dispersion is purchased, the shelf life of the dispersion must be managed, and may be a source of costs.

WO2016/141126 discloses a process for preparing lignocellulosic based composites, which are bonded with an adhesive comprising a protein source and a curing agent, namely a PAE resin. According to this process, a powdered or "dry" (*e.g.* flour) protein source is mixed with a lignocellulosic material after and separately from the mixing of the lignocellulosic material with a curing agent (resin).

Such a method is also not simple or cost-effective in that it requires the production or supply of a plant powder, and in the latter case the management of the shelf life of the powder. Furthermore, ensuring a good distribution of the powder in the composite material may be complex, in particular in that sedimentation of the powder may occur.

### Invention Summary

The present invention aims at providing a process for the manufacture of a lignocellulosic fibre-based composite material which solves at least parts of the above mentioned problems.

The present invention thus relates to a process for the manufacture of a lignocellulosic fibre-based composite material comprising the steps of:
- obtaining a fibrous mix (S1) comprising defibrated lignocellulosic material and defibrated formulated plant seed pellets (preferably formulated plant seed meal pellets); wherein the formulated plant seed pellets (preferably formulated plant seed meal pellets) comprise a plant seed (preferably plant seed meal), and at least one additive (which is not a plant seed or plant seed meal).
- blending the fibrous mix with a resin to form a composite mixture; and
- curing (S3) the composite mixture, thereby forming the lignocellulosic fibre-based composite material.

In this process, the step of obtaining a fibrous mix can comprise:
- providing a lignocellulosic material and providing formulated plant seed pellets (preferably formulated plant seed meal pellets);
- mixing the lignocellulosic material and the formulated plant seed pellets (preferably formulated plant seed meal pellets), thereby obtaining a mix of lignocellulosic material and formulated plant seed pellets (preferably formulated plant seed meal pellets); and
- defibrating the mix of lignocellulosic material and formulated plant seed pellets (preferably formulated plant seed meal pellets).

A formulated (additivated) plant seed pellet is a pellet (granulate) based on a plant seed (preferably a plant seed meal), in which at least another component other than a plant seed or plant seed meal is added for pelletization.

The formulated plant seed pellets can comprise seeds of several plant species. For example, the formulated plant seed pellet can be formulated plant seed meal pellets, comprising a mix of plant seed meals of several plant species or a mix of whole plant seeds and plant seed meals of the same species of different species.

This allows different ingredients to be combined in the form of a pellet (granulate) to reduce the amount of resin (such as PAE resin) used in the process to form the composite mixture and the composite material. This makes it possible to increase the ratio of biobased content in the composition of the binder of the obtained composite material.

By adding an additive to the plant seeds (preferably to the plant seed meal), used to form the pellets, a portion of the plant seed (preferably plant seed meal) can be substituted while the mechanical properties and more generally the performance of the composite material can be maintained compared to the performance of a composite material obtained with plant seed pellets without said additive.

Furthermore, adding one or several additives during pelletization can simplify the industrial implementation of the process for manufacture of a lignocellulosic fibre-based composite material, in that this can avoid having to add those additives during the process.

In a process according to the invention, a fibrous mix mainly comprised of a defibrated lignocellulosic material and defibrated formulated plant seed pellets is formed before being blended with a resin (i.e. "resinated").

The fibrous mix comprises at least 40%, preferably at least 60%, more preferably 80% w/w on dry matter of fibres.

For defibration, the lignocellulosic material and the formulated plant seed pellets (preferably formulated plant seed meals pellets) are passed through a defibrator (such as by the Asplund or Mason method). The defibrated formulated plant seed pellets may be a source of fibres (fibre-shaped particles) and/or non-fibre particles having properties (length, diameter or section, mechanical properties) which are different from those of the lignocellulosic material. But above all, the defibrated formulated plant seed pellets may be a protein source that enhances the adhesive and mechanical properties of the adhesive agent used in the formed composite material. Compared to the disclosure of the known prior art references, the process according to the invention greatly reduces the amount of water used. In particular, no water is used to form a plant flour (or meal) or protein dispersion.

Furthermore, the process of the invention addresses the viscosity issues that may occur in processes according to the prior art that may be caused by the use of a plant flour (or meal) dispersion. No shelf life of such dispersion must be managed.

Advantageously, no protein in powder form (such as soy protein isolate) is used in the process of the invention (other than the formulated plant seed pellets which can contain protein in powder form), which limits the risk of sedimentation of the protein source during the process and provides a better protein distribution in the composite material.

Composite materials having better mechanical performance, such as flexural modulus of rupture (MOR) and modulus of elasticity (MOE), may be obtained, compared to composite material obtained by a process using a plant powder dispersion.

In such embodiment of a process according to the invention, refining the lignocellulosic material and formulated plant seeds is performed in a single step, which may be performed directly on the composite material production site. This is cost-effective, compared to prior art processes that require separate grinding or milling of plant material.

The step of defibrating the mix of lignocellulosic material and formulated plant seed pellets may comprise a step of steaming the mix of lignocellulosic material and formulated plant seed pellets before defibration by a thermo-mechanical process or a pressure release based process.

The step of defibrating the mix of lignocellulosic material and formulated plant seed pellets (preferably formulated plant seed meal pellets) may comprise:
- steaming the mix of lignocellulosic material and formulated plant seed pellets in a steaming bin by steam to a temperature comprised between 70°C and 150°C, and preferably between 80 °C and 95 °C,
- conveying to a pre-heater the steamed mix of lignocellulosic material and formulated plant seed pellets and squeezing water out of the mix of lignocellulosic material and formulated plant seed pellets before it enters a pre-heater,
- pre-heating the squeezed mix of lignocellulosic material and formulated plant seeds pellet in the pre-heater to a temperature depending on the lignocellulosic material and adapted to soften the lignocellulosic material fibres to ease their separation,
- processing the pre-heated mix of lignocellulosic material and formulated plant seed pellets in a refiner, thereby obtaining the fibrous mix.

Alternatively, the step of defibrating the mix of lignocellulosic material and formulated plant seed pellets (preferably formulated plant seed meal pellets) may comprise:
- placing the mix of lignocellulosic material and formulated plant seed pellets into a chamber;
- steaming the mix of lignocellulosic material and formulated plant seed pellets;
- increasing the pressure inside the chamber to a high pressure; and.
- releasing the mix of lignocellulosic material and formulated plant seed pellets through an orifice of the chamber to atmospheric pressure.

In the step of providing a lignocellulosic material, the lignocellulosic material may be in a discrete form, such as chips.

The fibrous mix may comprise a weight ratio of defibrated lignocellulosic material to defibrated formulated plant seed pellets comprised between 40:60 and 99:1, and preferably between 80:20 and 95:5.

The composite mixture may comprise:
- an amount of defibrated lignocellulosic material ranging from 40% to 99%, preferably from 50% to 95%, and more preferably from 80% to 90%, for example 84% in weight of the total dry matter of the composite mixture, and
- an amount of defibrated formulated plant seed pellets ranging from 1% to 60%, preferably from 5% to 40%, and more preferably from 5% to 20% in weight of the total dry matter of the composite mixture.

The resin may represent from 0.1% to 20%, preferably from 0.3% to 5%, and more preferably from 0.5% to 3%, for example from 0.9% to 1.6% in weight of the total dry matter of the composite mixture.

The step of blending the fibrous mix with a resin may comprise resinating the fibrous mix in a blow line with the resin.

The step of curing the composite mixture may comprise the steps of:
- drying the resinated fibrous mix to a moisture content comprised between 0% and 20%, and preferably between 5% and 10%, forming (S32) the dried resinated fibrous mix into a mat,
- pressing the mat to obtain the lignocellulosic fibre-based composite material.

The invention also relates to a process for the manufacture of a fibreboard, comprising such a process, wherein it further comprises the steps of cooling and sawing the lignocellulosic fibre-based composite material, thereby forming fibreboards.

The invention also relates to a fibreboard obtained by such process.

The lignocellulosic material may be for example wood, corn stover, coconut husk, cotton stalk, flax, grass, hemp, kenaf, wheat straw, bagasse, oil palm trunks, bamboo, or a mix of two or more thereof. When the lignocellulosic material comprises wood, said wood may comprise at least one of pine wood, spruce wood, birch wood, and beech wood.

The formulated plant seed pellets used can comprise one or several additives. Many additives can be used.

The amount of additive in the formulated plant seed pellets can be adjusted to optimize the properties of the adhesive used in the final composite material.

Additives may be present in the final formulated plant seed pellets at a weight percent in the range from 0.01 (w/w) to 50% (w/w), preferably from 0.01% (w/w) to 30% (w/w), more preferably from 0.01% (w/w) to 20% (w/w).

The additive can be one of the following, mentioned as non-limitative examples.

### 1) Formaldehyde scavenging agents

A variety of formaldehyde scavenging agents can be used. Different formaldehyde scavenging agents have different reactivity profiles, and a particular formaldehyde scavenging agent (e.g., H2NC(O)NH2, Me2NC(O)NH2, or CH3CH2NH2) can be selected to optimize the performance properties of the adhesive composition and/or binder composition formed by the adhesive.

Accordingly, in certain embodiments, one or several formaldehyde scavenging agents can be used, having for formula RNH2, R2NH, RC(O)NH2, R2NC(O)NH2, or RC(O)N(H)R where R represents independently for each occurrence H, alkyl, aryl, or aralkyl.

In certain embodiments, the formaldehyde scavenging agent has the formula RN(H)C(O)N(H)R, where R represents independently for each occurrence H, alkyl, aryl, or aralkyl.

In certain other embodiments, the formaldehyde scavenging agent is H2NC(O)NH2, H2NC(O)N(H)Me, MeN(H)C(O)N(H)Me, H2NC(O)N(CH3)2, CH3C(O)NH2, CH3CH2C(O)NH2, CH3NH2, CH3CH2NH2, (CH3)2NH or (CH3CH2)2NH, where Me represents a methyl group.

In still other embodiments, the formaldehyde scavenging agent is H2NC(O)NH2.

The term "alkyl" as used herein refers to a saturated straight or branched hydrocarbon, such as a straight or branched group of 1-12, 1-10, or 1-6 carbon atoms, referred to herein as C1-C12 alkyl, C1-C10 alkyl, and C1-C6 alkyl, respectively. Exemplary alkyl groups include, but are not limited to, methyl, ethyl, propyl, isopropyl, 2-methyl-1-propyl, 2-methyl-2-propyl, 2-methyl-1-butyl, 3-methyl-1-butyl, 2-methyl-3-butyl, 2,2-dimethyl-1-propyl, 2-methyl-1-pentyl, 3-methyl-1-pentyl, 4-methyl-1-pentyl, 2-methyl-2-pentyl, 3-methyl-2-pentyl, 4-methyl-2-pentyl, 2,2-dimethyl-1-butyl, 3,3-dimethyl-1-butyl, 2-ethyl-1-butyl, butyl, isobutyl, t-butyl, pentyl, isopentyl, neopentyl, hexyl, heptyl, octyl, etc.

The term "aryl" as used herein refers to refers to a mono-, bi-, or other multi-carbocyclic, aromatic ring system. Unless specified otherwise, the aromatic ring is optionally substituted at one or more ring positions with substituents selected from alkanoyl, alkoxy, alkyl, alkenyl, alkynyl, amido, amidino, amino, aryl, arylalkyl, azido, carbamate, carbonate, carboxy, cyano, cycloalkyl, ester, ether, formyl, halogen, haloalkyl, heteroaryl, heterocyclyl, hydroxyl, imino, ketone, nitro, phosphate, phosphonato, phosphinato, sulfate, sulfide, sulfonamido, sulfonyl and thiocarbonyl. The term "aryl" also includes polycyclic ring systems having two or more cyclic rings in which two or more carbons are common to two adjoining rings (the rings are "fused rings") wherein at least one of the rings is aromatic, e.g., the other cyclic rings may be cycloalkyls, cycloalkenyls, cycloalkynyls, and/or aryls. Exemplary aryl groups include, but are not limited to, phenyl, tolyl, anthracenyl, fluorenyl, indenyl, azulenyl, and naphthyl, as well as benzo-fused carbocyclic moieties such as 5,6,7,8-tetrahydronaphthyl. In certain embodiments, the aryl group is not substituted, i.e., it is unsubstituted.

The term "aralkyl" as used herein refers to an aryl group having at least one alkyl substituent, e.g. aryl-alkyl-. Exemplary aralkyl groups include, but are not limited to, arylalkyls having a monocyclic aromatic ring system, wherein the ring comprises 6 carbon 10 atoms. For example, "phenylalkyl" includes phenylC4 alkyl, benzyl, 1-phenylethyl, 2- phenylethyl, etc.

### 2) Antimicrobial agents such as oxidants or nisin,

### 3) Antibacterial agents such as nitrogen derivatives,

### 4) Fungicides such as sulphur-containing products,

### 5) Preservatives such as citric acid, paraben,

### 6) Pigments such as mineral pigments, e.g. titanium dioxide, or carbon black,

### 7) Agents improving moisture resistance or water-repellent agents

These improving moisture resistance or water-repellent agents improve the ability of the composite material to be resistant to water, *i.e.,* not absorb water. Exemplary types of agents that improve moisture resistance include fluorinated polyol compounds, silicones, siloxanes (including functionalized siloxane polymers, such as hydroxy-terminated siloxane polymers or hydroxyl alkyl siloxane polymers), polyolefin polymers, wax ((e.g., fatty acids (such as an alkyl carboxylic acid), salts of a fatty acid (e.g., an alkali metal salt of an alkyl carboxylic acid), esters of a fatty acid (e.g., an alkyl ester of a carboxylic acid, an aryl ester of a carboxylic acid, an alkyl ester of an alkanoic acid, or an aryl ester of an alkanoic acid), fatty alcohols, mixtures of hydrophobic hydrocarbons.

### 8) Fire-resistant or fire retardant agents.

Exemplary fire retardants include, for example, (i) phosphoric acid or a salt thereof, such as a mono-ammonium phosphate, di-ammonium phosphate, ammonium poly -phosphate, melamine phosphate, guanidine phosphate, urea phosphate, alkali metal phosphate, and alkaline earth metal phosphate, (ii) a halogenated phosphate compound, (iii) a phosphate ester, such as tri-o-cresyl phosphate and tris(2,3-dibromopropyl) phosphate, (iv) a chlorinated organic compound, such as a chlorinated hydrocarbon or chlorinated paraffin, (iv) a brominated organic compound, such as a brominated hydrocarbon, bromo-bisphenol A, tetrabromobisphenol A (TBBPA), decabromobiphenyl ether, octabromobiphenyl ether, tetrabromobiphenyl ether, hexabromocyclododecane, bis(tetrabromophthalimido) ethane, tribromophenol, andbis(tribromophenoxy) ethane, (v) a brominated oligomer or brominated polymer, such as TBBPA polycarbonate oligomer, brominated polystyrene, and TBBPA epoxy oligomer, (vi) a borate compound, such as an alkali metal borate, ammonium borate, or mixture comprising one or more of borax, boric acid, boric oxide, and disodium octoborate, (vii) aluminium materials, such as aluminium trihydrate and aluminium hydroxide, (viii) an alkaline earth metal hydroxide, such as magnesium hydroxide, (ix) an alkali metal bicarbonate, such as sodium bicarbonate, (x) an alkaline earth metal carbonate, such as calcium carbonate, (xi) antimony trioxide, (xii) hydrated silica, (xiii) hydrated alumina, (xiv) dicyandiamide, (xv) ammonium sulfate, and (xvi) a mixture of guanylurea phosphate and boric acid, (xvii) graphite, (xviii) melamine, and (xix) a phosphonate compound, such as diethyl-N,N-bis(2-hydroxyethyl) aminoethyl phosphonate; dimethyl-N,N-bis(2-hydroxyethyl) aminomethyl phosphonate; dipropyl-N,N-bis(3-hydroxypropyl) aminoethyl phosphonate; and dimethyl-N,N-bis(4-hydroxybutyl) aminomethyl phosphonate.

In certain embodiments, the fire retardant is (i) phosphoric acid or a salt thereof, such as a mono-ammonium phosphate, di-ammonium phosphate, ammonium poly -phosphate, melamine phosphate, guanidine phosphate, urea phosphate, alkali metal phosphate, and alkaline earth metal phosphate, (ii) a phosphate ester, such as tri-o-cresyl phosphate and tris(2,3- dibromopropyl) phosphate, aluminium trihydrate and aluminium hydroxide, (iii) an alkaline earth metal hydroxide, such as magnesium hydroxide, (iv) an alkali metal bicarbonate, such as sodium bicarbonate, (v) antimony trioxide, or (vi) hydrated alumina.

### 9) Catalysts

Exemplary catalysts include a primary amine, a secondary amine, a tertiary amine, an organometallic compound, an ammonium compound, or a combination thereof.

### 10) Cellulose nanoparticles

Cellulose nanoparticles can be added to the seed pellet to achieve certain performance properties, such as to provide an adhesive composition with increased toughness and/or bond strength. Cellulose nanoparticles can be obtained from commercial sources or isolated from plant-based fibers by acid-hydrolysis. Cellulose nanoparticles can be characterized by, for example, the size of the nanoparticle, the cross-sectional shape of the nanoparticle, and the cross-sectional length and aspect ratio of the nanoparticle. Accordingly, in certain embodiments, the cellulose nanoparticle has a size of from about 1 nm to about 2000 nm, about 10 nm to about 1000 nm, about 10 nm to about 500 nm or about 10 nm to about 200 nm. In certain embodiments, the cross-sectional shape of the nanoparticle may be triangular, square, pentagonal, hexagonal, octagonal, circular, or oval. In certain other embodiments, the average cross-sectional length of the cellulose nanoparticle is about 0.1 nm to about 100 nm, or about 1 nm to about 10 nm.

### 11) A pH modulators

The pH modulator can be an acid or base. In certain embodiments, the pH modulator is an alkali metal hydroxide (e.g., sodium hydroxide or calcium hydroxide) or an alkali metal salt of a carboxylate organic compound (e.g., an alkali metal salt of citrate, such as di-sodium citrate).

### 12) Wood preservatives.

Exemplary wood preservatives include, for example, (i) chromated copper arsenate (CCA), (ii) alkaline copper quaternary, (iii) copper azole, (iv) a borate preservative compound, (v) a sodium silicate-based preservative compound, (vi) a potassium silicate-based preservative compound, (vii) a bifenthrin preservative compound, (viii) a coal-tar creosote, (ix) linseed oil, (x) tung oil, and (xi) an insecticide, such as an organochloride compound, organophosphate compound, carbamate compound, pyrethroid, neonicotinoid, and ryanoid.

### 13) Proteins

The protein can be any protein from a plant, animal (such as gelatin) or microorganism, preferably from a plant, more preferably from a plant seed, or a mixture thereof. It can be a protein concentrate (comprising more than 60 wt% proteins based on dry matter) or a protein isolate (comprising more than 80 wt% proteins based on dry matter). Preferred proteins are soy protein isolate and wheat gluten concentrate.

### 14) Carbohydrates

Exemplary carbohydrates include monosaccharides (such as glucose, fructose, galactose), disaccharides (such as sucrose, lactose, lactulose, cellobiose, xylobiose, tetrahalose, maltose) or polysaccharides (such as starch, cellulose, xylans, pectins, chitin and glycogen).

### 15) Polyols

Exemplary polyols include glycerol, ethylene glycol, diethylene glycol, triethylene glycol, tetraethylene glycol and oligomers of diethylene glycol.

### 16) Sugar alcohols

Exemplary sugar alcohols include arabitol, xylitol, mannitol, sorbitol, maltitol, isomalt, lactitol, polyglicitol.

According to a preferred embodiment of the invention, the additive is selected from the group consisting of a formaldehyde scavenging agent (preferably urea) and a protein isolate (preferably a protein isolate such as soy protein isolate) or a protein concentrate (preferably a plant protein concentrate such as wheat gluten concentrate).

The plant seeds may be provided, before being formulated, in the form of a plant seed meal.

By "plant seed meal" (also named plant seed flour), it is meant a plant seed which has been submitted to an extraction step such as, for example, a fat or protein extraction. In particular, the plant seed meal may be defatted plant meal (such as solvent (e.g. hexane, isopropanol or ethanol extracted plant meal), press cake (such as hot- or cold-press cake), expeller. Preferably, the plant seed meal is a defatted plant seed meal (such as solvent extracted plant meal).

The solvent used to prepare the solvent extracted plant seed meal may be organic and/or aqueous, such as hexane or aqueous alcohol, preferably hexane.

The plant seeds used to form formulated plant seed pellets are advantageously oil and/or protein seeds, and preferably oil and protein seed meals.

These plant seeds may be seeds of plants belonging to one or several of the following families, genus and species:
- Arecaceae such as:
   ▪ *Attalea,*
   ▪ *Elaeis,* and
   ▪ *Carthamus,* such as *Carthamus tinctorius,*
- Asteraceae such as:
   ▪ *Helianthus,* such as *Helianthus annuus,* (i.e sunflower,)
- Brassicaceae such as:
   ▪ *Brassica,* such as *Brassica napus, Brassica juncea, Brassica nigra, Brassica rapa, Brassica carinata,* and
   ▪ *Camelina* such as *Camelia Sativa,*
- Cannabaceae such as:
   ▪ *Cannabis,* such as *Cannabis sativa,*
- Fabaceae such as:
   ▪ *Glycine,* such as *Glycine max*
   ▪ *Lupinus,* and
   ▪ *Pisum,* such as *Pisum sativum*
- Linaceae such as:
   ▪ *Linum* such as *Linum usitatissimum,*
- Malvaceae such as:
   ▪ *Gossypium,* and
- Poaceae such as:
   ▪ *Avena,* such as *Avena sativa,*
   ▪ *Eleusine,* such as *Eleusine coracana,*
   ▪ *Hordeum,* such as *Hordeum vulgare,*
   ▪ *Oryza,* such as *Oryza sativa, Oryza glaberrima,*
   ▪ *Panicum,* such as *Panicum miliaceum,*
   ▪ *Sorghum,* such as *Sorghum bicolor,*
   ▪ *Triticum,* such as *Triticum aestivum, Triticum durum,*
   ▪ *Zea,* such as *Zea mays.*

A preferred plant seed is a seed of plant belonging to the families Asteraceae, Brassicaceae or Fabaceae, more preferably Asteraceae.

Another preferred plant seed is a seed of plant belonging to the genus *Helianthus, Brassica* or *Glycine,* more preferably *Helianthus.*

Another preferred plant seed is a seed of plant belonging to the species *Helianthus annuus, Brassica napus, Brassica juncea, Brassica nigra, Brassica rapa, Brassica carinata, Glycine max,* more preferably *Helianthus annuus.*

The resin may be selected from:
- a polyamidoamine-epichlorohydrin (PAE) resin, a polyalkylenepolyamine-epichlorohydrin resin, an itaconic acid-based polyamidoamine-epichlorohydrin resin and/or an amine polymer-epichlorohydrin resin,
- an epoxy resin such as bisphenol A diglycidyl ether epoxy resin,
- isocyanate resin, such as polymeric methylenediphenyl diisocyanate (pMDI)
- urea-formaldehyde resin, melamine-formaldehyde resin, melamine-urea-formaldehyde resin, phenol-formaldehyde resin, resorcinol-formaldehyde resin, other resins based on formaldehyde or on another aldehyde such as furfural, propanal, butyraldehyde, succinaldehyde, glutaraldehyde, dimethoxyethanal, glyoxylic acid, glycolaldehyde, vanillin,
- a polyurethane-based resin,
- a polyacid-based resin such as based on maleic anhydride or acetic acid,
- an acrylate-based or methacrylate-based resin such as poly(methyl methacrylate),
- ethylene vinyl acetate (EVA), ethylene-co-vinylacetate-co-acrylic acid, ethylene-co-vinylacetate-co-methacrylic acid, ethylene-co-vinylacetate-co-vinylalcohol, carboxylated vinyl acetate-ethylene copolymers, ethylene vinyl alcohol (EVOH), polyvinylalcohol, polyvinylbutyral-co-vinylalcohol, polyvinylacetate-co-vinylalcohol.

A preferred resin is selected from a polyamidoamine-epichlorohydrin (PAE) resin, a polyalkylenepolyamine-epichlorohydrin resin, an itaconic acid-based polyamidoamine-epichlorohydrin resin and/or an amine polymer-epichlorohydrin resin, preferably a PAE resin.

The use of a non-formaldehyde resin (e.g. PAE resin) decreases or eliminates formaldehyde emission.

The invention also relates to a formulated plant seed pellet comprising a plant seed meal and at least one additive.

Such formulated plant seed pellet can be composed of:
- sunflower meal as plant seed meal;
- between 5% and 20%, such as 5%, 10%, 15% or 20% of one of wheat gluten concentrate, soy protein isolate, and urea;
- optionally, one or more other additives in a range from 0.01% to 20% (w/w).

The invention also relates to a fibrous mix comprising lignocellulosic material fibres and defibrated formulated plant seed pellets.

The invention also relates to a composite mixture comprising such a fibrous mix and a resin.

The invention also relates to a composite mat formed from such composite mixture.

The invention also relates to a lignocellulosic fibre-based composite material comprising a fibrous mix as above described and a resin, the fibrous mix forming a reinforcement and adhesive for said lignocellulosic fibre-based composite material and the resin, in a cured form, forming or being part of a matrix of said lignocellulosic fibre-based composite material.

The invention finally relates to a fibreboard panel made of a lignocellulosic fibre-based composite material as disclosed.

### Brief Description of the Several Views of the Drawing

Other particularities and advantages of the invention will also emerge from the following description.

In the accompanying drawings, given by way of non-limiting examples:
- figure 1 is a schematic view of a pellet mill that can be used in a process for producing formulated plant seed pellets that can be used in a process according to the invention;
- figure 2 is a schematic block diagram representing the main steps.of a process according to the invention;
- figure 3 is a schematic block diagram representing a first example embodiment of one of the steps of Figure 2;
- figure 4 is a schematic block diagram representing a second example embodiment of one of the steps of Figure 2;
- figure 5 is a schematic block diagram representing a first example embodiment of one of the steps of Figure 4;
- figure 6 is a schematic block diagram representing a second example embodiment of one of the steps of Figure 4;
- figure 7 is a schematic block diagram representing an example embodiment of one of the steps of Figure 2.

### Detailed Description of embodiments of the invention

The process according to the present invention uses formulated plant seed pellets. As above explained, a formulated (additivated) plant seed pellet is a pellet based on a plant seed meal, in which at least another component (additive) is added for pelletization.

Several pelletizing processes can be used to obtain such formulated plant seed pellets. Pelletizing is mainly a compressing technique which results in raw material agglomeration by compacting and forcing it through die openings by a mechanical process.

When the raw material used is a plant seed, in particular plant seed meal, such as a sunflower meal, then this raw material can be grinded or de-agglomerated to reduce the size of the particles, advantageously from 0.1 to 5 mm. Grinder used can be hammermill, knife mill or nip roll mill.

Pelletizing is generally performed by a "pellet mill" device. Pellet mill devices include so called pellet presses, roll presses, and extruders.

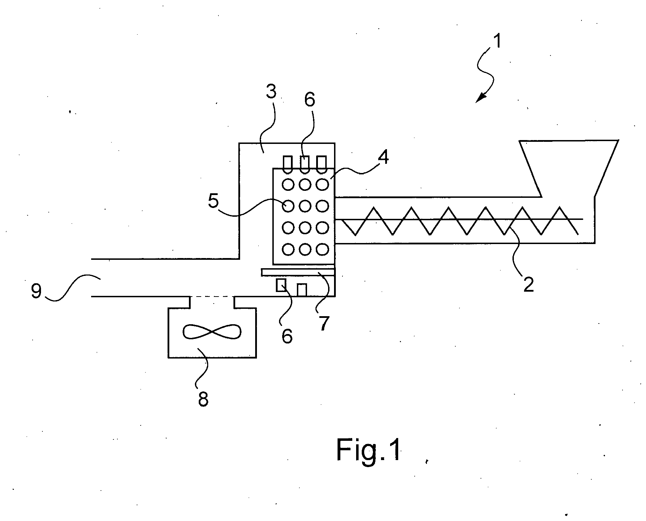

An example pellet mill device (or "pellet mill"), namely a pellet press or "pelletizer" is represented in Figure 1.

The pellet mill 1 includes a feeder 2 which comprises a screw-conveyor system or any suitable conveying system to deliver a controlled and constant flow of material feed into a pelleting chamber 3.

The pelleting chamber 3 comprises a die 4. The die 4 is a part comprising calibrated holes 5. Many embodiments of pellet mill dies are known. In the represented embodiment, the die 4 is a cylindrical rotating die. Rollers press the material through the holes 5 of the die 4. Generally, industrial pellet mills use a die and roller system assembled in a vertical plane but pellet mills for lower scale production use horizontal or "flat" circular die.

The material is pressed and passed through holes by roller pressure to form cylindrical shaped pellets 6 that are finally cut at the proper length by one or several stationary knives 7 located outside the rotating die 4.

The pellet mill further comprises a cooler 8, generally an air-cooler. The cooler allows to cool down the temperature of pellets. Indeed, compression of raw material results in a material temperature increase due to the friction increase with pressure. Cooling ensures strengthening and durability of the pellets.

To form formulated plant seed pellets, the plant seed (preferably plant seed meal) and the additive are processed together in the pellet mill.

The formulated plant seed pellet obtained at the exit 9 of the pellet mill 1 has a bulk density comprised between 300 kg/m3 and 500 kg/m3, preferably between 350 kg/m3 and 450 kg/m3.

The main factors affecting pellet density are described hereafter.

Most essential parameters in the pellet formulation directly depend on the characteristics of the raw material which is used.

Moisture content is an important parameter. It is advantageously monitored between 10% and 20% (in weight) to obtain pellets with an acceptable density and to avoid pellet degradation by moisture absorption.

The targeted moisture content of the formulated plant seed pellet is advantageously comprised between 8% and 14%.

The size of the particles of the raw material before pelletization is advantageously comprised between 30 µm and 5 mm. A raw material comprising a mix of particles of various sizes in a wide range of size is preferred to obtain high density formulated plant seed pellet (thanks to the small sized particles), while comprising larger particles that will participate to the mechanical properties of the final composite material. The particles of largest size must however be smaller than the holes 5 of the die 4. (for example a largest particle size of 5 mm for die holes having a 6 mm diameter).

Other factors are directly related to the pelletization process parameters. The flow rate of raw material at the inlet of the pellet mill is controlled by the feeder actuation e.g. by the rotation speed of the feeder screw, the roller speed and pressure (pressing force) applied to the material in the die chamber. Typical screw speeds and roll speeds are respectively between 7,5 rpm and 300 rpm, and between 1 and 16 rpm. The pressing force can typically be between 10 kN/cm and 150 kN/cm.

Formulated plant seed pellets have preferably a cylindrical shape. They have advantageously a diameter comprised between 4 mm and 10 mm (preferably 6 mm). They have advantageously a length comprised between 30 mm to 60 mm.

Pelletization is conventionally performed on defatted plant meal, for example defatted sunflower, soy or rapeseed seed meal. The defatted meal is obtained after oil extraction by mechanical pressing and extraction with a solvent such as hexane, to produce protein-rich pellets (generally produced for animal feed).

Some characteristics of conventional pellets obtained from common processed biomasses are shown in table 1 below.

**Table 1 - Characteristics of some pellets obtained from common oleaginous biomasses trituration**

| **Product** | **Density (kg/m3)** | **Protein (%)** | **Fat (%)** |
|---|---|---|---|
| Cottonseed Meal pellet | 560-640 | 41 | 1,5 |
| Linseed Meal pellet | 530 | 32 | 3,5 |
| Soybean Meal pellet | 650 | 48 | 3,5 |
| Sunflower Meal pellet | 450-500 | 37 | 1,8 |
| Rapeseed Meal pellet | 400-450 | 33 | 2,5 |

The above described pellet mill can be used to produce formulated plant seed pellets. For example, formulated sunflower meal pellet, such as formulated sunflower meal pellet having the formulations detailed in the Example bellow. Formulated meal pellets based on the other oil and protein seed of the above Table 1, can also be obtained with this device and process.

The present disclosure also comprises the pelletization of a mix of plant seeds (e.g. a mix of whole plant seeds, a mix of plant seed meals or a mix of whole plant and plant seed meals) of several plant species. Pellets comprising plant seeds of several plant species can be used as alternative to formulated plant seed pellets comprising at least one additive, in a process for the manufacture of a lignocellulosic fibre-based composite material as herein disclosed. Furthermore, the formulated plant seed pellets used in the present invention can of course comprise seeds of several plant species (e.g. seed meals of several plant species).

Alternative pelletization processes can also be used.

In particular, a pellet extrusion process can be used.

The extrusion process is well known in art.

Extrusion is a continuous thermomechanical process consisting in forcing a raw material to go through a die by the mean of an Archimedes screw (or endless screw). A pre-grinding of the raw seed meal, and more generally of the raw material used to form formulated plant seed pellets can be advantageously performed.

This process is performed with raw materials which are able to soften with temperature.

This softening could be linked to melting process or plasticization process.

In formulated plant seed pellet production, the softening comes from the plasticization of carbohydrate (e.g., starch) or globular protein structures which are weakened by the cumulative effect of shear and temperature.

The raw material formulation used in extrusion processes generally includes a plasticizer like water or water-soluble small molecules (such as a polyol).

The amount of plasticizer to be added in combination with formulated plant seeds is comprised between 10% to 40% wt.

Extruder could be equipped with one or two screws. The screw(s) of the extruder is(are) positioned in a heated jacket which helps to process highly viscous material.

With a single screw extruder, the jacket and the associated screw could be divided in three areas.

A first area is a feeding area, situated at the entrance of the jacket where the raw material is introduced and where the screw section is constant.

The granulometry of the formulated plant seed ingredients is adjusted based on channel dimensions in the heated jacket.

Indeed, too small particles will not be fed adequately to the compression area. Too large particles could block the screw rotation.

The ideal particle size of the formulated plant seed used in an extrusion process is advantageously comprised between 100µm to 3cm.

If additives which can't be softened by the extruder are comprised in the ingredients of the formulated plant seed pellets, for example a metallic oxide compound, clay, or a phosphorous compound, the particle size range of these additives needs to be lower than the die dimensions (e.g. diameter) and preferably lower than 10 times of the die diameter, for example 1mm.

A second area is a compression area where the size of the channel in which the product conveyed is reduced, resulting in a pressure increase. In this area the shape of the particles of the product (raw material) present in the extruder is modified. The plasticizer is locally distributed in the product microstructure, resulting in a destruction of weak interactions between particles or molecules and in a product softening. The raw material is also brought in the heated jacket to an adequate temperature, advantageously comprised between 70 °C to 160°C depending on the thermo-mechanical properties of the raw material used to form formulated plant seed pellets.

A third area is a pumping area where the screw section of the channel is constant, but small.

In the third area, a temperature profile is applied to melt or soften the raw material used to form formulated pellets. This temperature profile is adapted based on the raw material thermomechanical properties. The exit temperature can be comprised comprised between 70 °C to 170 °C. At the exits of the heated jacket the die has the shape (e.g. the diameter) desired for the final product. Typically, the die can have a circular shape and a diameter comprised between 1 to 10 mm, preferably between 5 and 6 mm, to form pellets having a cylindrical shape of such diameter.

The extruded formulated plant seed material is cooled down (advantageously by air) and cut in pellets of the desired length (advantageously between 1mm to 3 cm), thus forming formulated plant seed pellets.

The applicant has found that lignocellulosic fibre-based composite material boards produced with plant seed pellets that are obtained by hot extrusion have similar or slightly better properties (in terms of mechanical resistance and water resistance) than corresponding boards obtained with pellets obtained with a pellet press. Hot extrusion can thus be used to produce formulated plant seed pellets used in a process for the manufacture of a lignocellulosic fibre-based composite material according to the present invention.

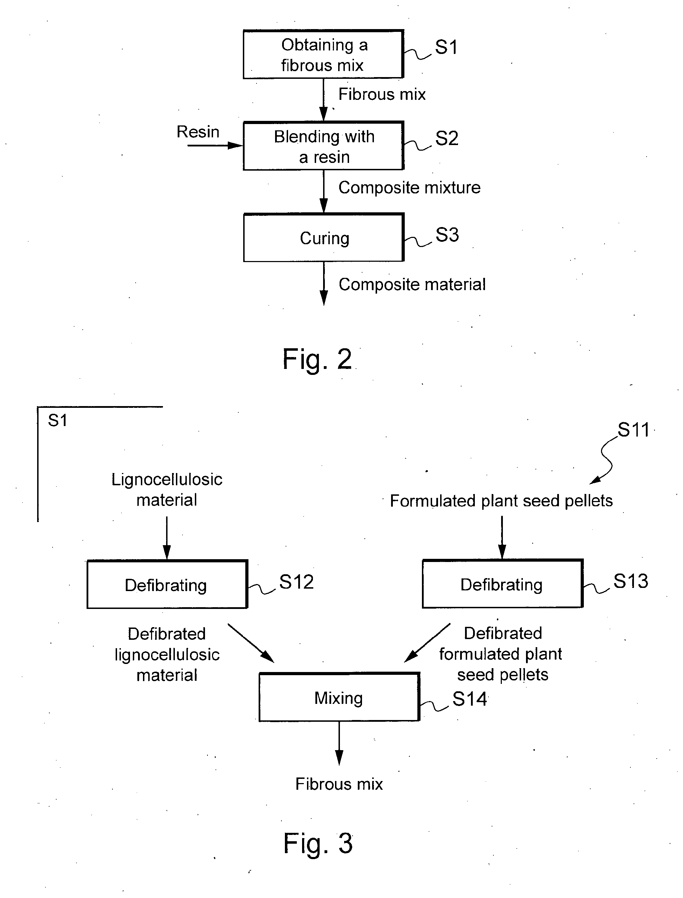

Figure 2 represents the main steps of a process according to the invention. In a step of obtaining a fibrous mix (S1), a mix comprising a defibrated lignocellulosic material and defibrated formulated plant seed pellets is obtained.

The term "resin" refers to an adhesive, a binder, a cross-linking agent or a curing agent in the form of a liquid or solid.

By lignocellulosic material, it is meant a material substantially comprising (or comprising a significant proportion of) lignocellulosic fibres. This comprises plants or plant parts. The lignocellulosic material may in particular be wood (e.g. pine wood, spruce wood, birch wood, or beech wood). Other types of lignocellulosic material can be used in the invention, as an alternative or complement to wood, such as corn stover, coconut husk, cotton stalk, flax, grass, hemp, kenaf, wheat straw, rice straw, bagasse, oil palm trunks, bamboo, or a mix thereof. The lignocellulosic material can be provided in a raw form, or a transformed form. Typically, wood may be provided in the form of chips.

The formulated plant seed pellets used in the process are advantageously essentially obtained from oil and/or protein seeds.

The formulated plant seed pellets are advantageously obtained with a pellet mill and a pelletization process as described with reference to Figure 1, or alternative suitable devices and processes as above explained.

For example, the plant seeds used as majoritarian component of the formulated plant seed pellets are seeds of plants belonging to one or several of palm, safflower (Carthamus tinctorius), sunflower (*Helianthus annuus*)*,* rape, canola (*Brassica napus*)*,* mustard (*Brassica juncea, Brassica nigra, Brassica rapa, Brassica carinata*)*,* camelina (*Camelina sativa*)*,* hemp (*Cannabis sativa*)*,* soybean (*Glycine max*)*,* lupine (*Lupinus*)*,* pea (*Pisum sativum*)*,* flax (*Linum usitatissimum*), cotton (*Gossypium*)*,* cereals (*e.g.,* maize (*Zea mays*), rice (*Oryza sativa*), wheat (*Triticum aestivum*), barley (*Hordeum vulgare*), sorghum (*Sorghum bicolor*), millet (Panicum miliaceum), oats (*Avena sativa*)), preferably sunflower.

A mix of some of these seeds can be used.

The seeds (in particular oilseeds) may be defatted *(i.e.* deoiled) before they are transformed into a meal used to produce formulated plant seed meal pellets.

The pellets can thus be prepared from a seed meal. In such case, the (whole) seeds are ground and crushed, yielding a meal, which is pressed to extract some or most oil from the seeds, thus forming a press cake.

Remaining oil (*e.g.* a press cake obtained from sunflower seeds contains 15-20% of oil) may be extracted partially or totally from the oilseed press cake.

To extract the remaining oil, solvents can be used. For example, hydrophobic solvents such as pentane and/or hexane may be used. Water soluble solvent such as alcohol (e.g., ethanol) may also be used. When such organic solvents are used, the oil content remaining in the seed meal is low (e.g..ranging from 0.1 to 4 wt% by total weight of the pressed cake). Oilseed meals have a protein content ranging from 15% to 60% w/w, preferably from 20% to 50% w/w, more preferably from 30% to 50% w/w.

Plant seeds, which may be in a form of seed meal, having an oil content (determined by the Soxhlet method (ISO734:2016)) ranging from 0.1% to 4% w/w on dry matter and a protein content (measured according to French Standard NF EN Iso 16634 (2008)) ranging from 15% to 60% w/w on dry matter, preferably from 30% to 50% w/w on dry matter, more preferably from 30% to 50% w/w, are advantageous.

Information regarding. oilseed processing technologies is described for example in Laisney, J., 1984, L'huilerie moderne. Compagnie Française pour le Developpement des Fibres Textiles (CFDT), ISBN 2-905157-00-3*.* Information regarding sunflower meals is described for example in: Sunflower Seed Preparation and Oil Extraction, Etienne Le Clef and Timothy Kemper, published in Sunflower, 2015, pages 187-226, AOCS Press., ISBN 978-1-893997-94-3*.*

The lignocellulosic material and the formulated plant seed pellets are defibrated and mixed to form a fibrous mix. Defibration generally relates to the conversion of a material into fibrous constituents through a defibration process. In the case of plant seeds, defibration converts plant seeds into smaller size constituents such as fibrous constituents (fibre shaped particles) and/or non-fibrous constituents (non-fibre particles).

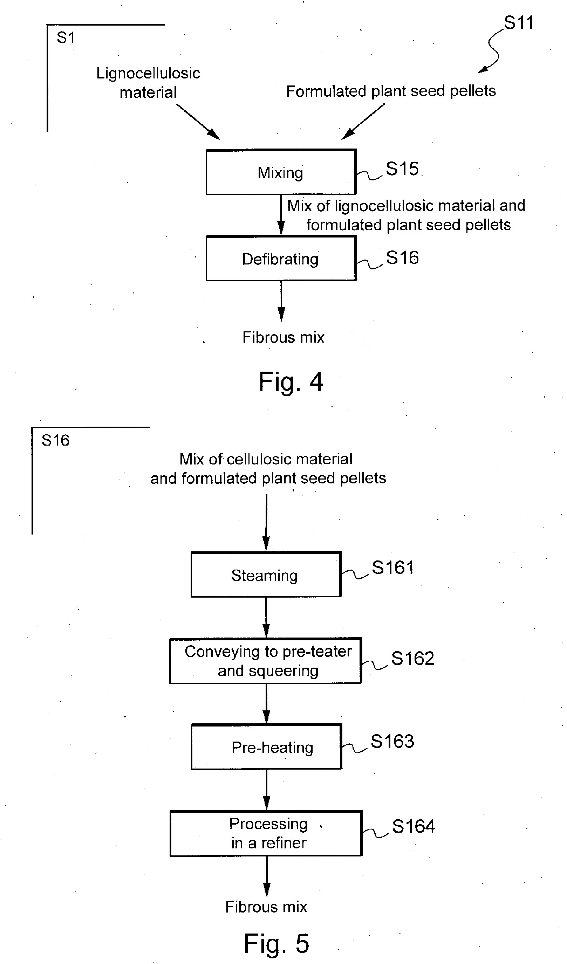

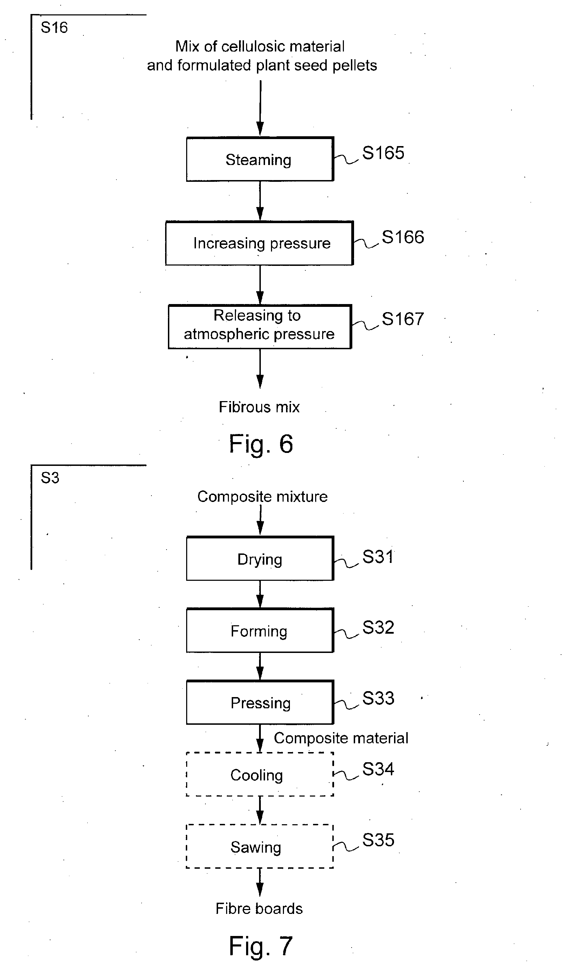

Defibration may be performed according to several processes, which are exemplified in Figures 5 and 6 hereafter described. There are two main ways to perform the step of obtaining a fibrous mix S1, which are described respectively with reference to Figure 3 and Figure 4.

The fibrous mix comprises a ratio of lignocellulosic material to formulated plant seed pellets comprised between 50:50 and 99:1, and preferably between 80:20 and 95:5, such as 88:12.

A step of blending the obtained fibrous mix with resin S2 is then performed. This step may be performed in a blow line, where the fibrous mix is sprayed with a resin, preferably a thermoset resin. After this step, a composite mixture is obtained. The amount of resin sprayed may advantageously be such that the resin *(i.e.* the dry matter of the resin) represents from 0.1% to 20%, preferably from 0.3% to 5%, more preferably 0.5% to 3%, in weight of the total dry matter of the composite mixture. In addition to the fibrous mix and the resin, an amine compound and/or additives not present (or not present in sufficient quantity) in the formulated plant seed pellet can be added at this step. The amine compound can be one of urea, methylurea, polyurea, polyvinylamine, melamine, polyethylenimine (PEI), diethanoldiamine, ethanoldiamine, ethanolamine, diethanolamine. The additive can be at least one of the above listed additives.

However, such addition is preferably avoided. Indeed, one of the advantages of the present invention is precisely that the additives and other advantageous compounds can be integrated directly into the formulated pellets. This simplifies the manufacturing process of the composite material according to the present invention.

The amine compound, provided by the formulated plant seed pellets and by optional addition can represent from 0.01% to 25%, preferably from 0.01% to 10%, and more preferably from 2% to 10% in weight of the total dry matter of the composite mixture (*i.e.* of the fibrous mix, resin, amine compound(s) and additive(s)).

The additive (or additives), provided by the formulated plant seed pellets and by optional addition can represent from 0.01% to 20%, preferably from 0.01% to 10%, and more preferably from 0.1% to 3% in weight of the total dry matter of the composite mixture (*i.e.* of the fibrous mix, resin, amine compound(s) and additive(s)).

In a subsequent curing step S3, the composite mixture obtained after blending the fibrous mix with resin is cured. In this step the curing agent (*i.e.* essentially the resin) is hardened by cross-liking of polymer chains. The result of this step is a composite material, which may be further processed to form a final product such as a fibreboard. An example embodiment of the curing steps S3, comprising several steps and optional steps to provide a fibreboard, is detailed with reference to Figure 7.

Figure 3 is a schematic block diagram representing a first example embodiment of the steps of obtaining a fibrous mix S1 comprising a defibrated lignocellulosic material and defibrated formulated plant seed pellets. A lignocellulosic material (e.g. wood chips) and formulated plant seed pellets are provided (S11).

According to this first embodiment, the lignocellulosic material is defibrated (step of defibrating the lignocellulosic material S12). In parallel, the formulated plant seed pellets are defibrated (step of defibrating the plant seeds S13).

The step of defibrating the lignocellulosic material S12 and the step of defibrating the formulated plant seed pellets S13 are performed independently. They may be performed on a same production site, or in different, independent, production sites. The defibrated lignocellulosic material and the defibrated formulated plant seed pellets are mixed (step of mixing S14) to form a homogeneous fibrous mix having the desired ratio of lignocellulosic material to plant seed material.

Figure 4 is a schematic block diagram representing a second example embodiment of the step of obtaining a fibrous mix S1 comprising a defibrated lignocellulosic material and defibrated formulated plant seed pellets.

A lignocellulosic material (e.g. wood chips) and formulated plant seed pellets are provided (S11). According to this second embodiment the lignocellulosic material and the formulated plant seed pellets are mixed (mixing step S15) to form a so-called mix of lignocellulosic material and formulated plant seed pellets. A step of defibrating the mix of lignocellulosic material and formulated plant seed pellets S16 is performed. In this steps, the lignocellulosic material and the formulated plant seed pellets are defibrated together, thereby forming a homogeneous fibrous mix.

Whether the lignocellulosic material and the formulated plant seed pellets are defibrated together according to the method of Figure 4 or separately according to the method of Figure 3, defibration can be performed according to two alternative types of process, respectively called Asplund method and Mason method.

Figure 5 represents an example embodiment of the step of defibrating the mix of lignocellulosic material and formulated plant seed pellets S16 according to an Asplund method.

The method of Figure 5 comprises a step of steaming S161 the mix of lignocellulosic material and formulated plant seed pellets in a steaming bin by steam being to a temperature comprised between 70°C and 110°C, and preferably comprised between 80°C and 95°C. In subsequent step of conveying and squeezing S162, the steam-heated mix is conveyed to a pre-heater. Water is squeezed out of the mix of lignocellulosic material and plant seeds, before the mix enters the pre-heater.

In the preheater, the squeezed mix of lignocellulosic material and formulated plant seed pellets is pre-heated (S163). The pre-heating temperature depends on the mix that is pre-heated, and essentially on the lignocellulosic material of the mix. More particularly, the pre-heating temperature must be adapted to soften the lignocellulosic material fibres to ease their upcoming defibration.

Then a step of processing the mix in a refiner S164 also called refining is performed.

The refiner comprises one or several discs and plates which are mounted on each of the opposing faces of the refiner disc(s). The plates and/or the disc(s) are rotary. The pre-heated mix is provided near the center of the plates and disks, and subjected to a centrifugal force that propels it outwards, so that it moves between the opposing refiner plates in a generally radial direction from the inner perimeter to the outer perimeter of the plates and disc(s).

The refiner plates generally feature a pattern of bars and grooves, as well as dams, which together provide a repeated compression and shear actions on the introduced material (*i.e.* the mix). The compression and shear actions acting on the material intend to separate fibres from the material, provides a certain amount of development of fibrillation of the material, and generates some fibre cutting which is usually less desirable.

The refiners can be high, medium or low consistency refiners. The refiner discs may operate at rotational speeds of 900 to 2300 revolutions per minute (RPM) when used for high consistency refining and as low as 400 revolutions per minute for low consistency refining.

After the defibrating step, a fibrous mix is obtained and can be further processed.

Figure 6 represents an example embodiment of the step of defibrating the mix of lignocellulosic material and formulated plant seed pellets S16 according to a Mason method.

The method of Figure 6 comprises placing the mix of lignocellulosic material and formulated plant seed pellets into a chamber. The chamber generally designates a closed volume able to sustain a high pressure. A step of steaming S165 is performed, wherein the mix of lignocellulosic material and formulated plant seed pellets is saturated with steam. The pressure inside the chamber is increased for this step to a pressure comprised between 200 and 1000 kPa, such as between 400 and 900 kPa, for example a pressure of about 690 kPa (which roughly corresponds to 100 pounds per square-inch).

A step of increasing the pressure S166 is performed, wherein the pressure inside the chamber is increased to a pressure comprised between 2000 and 4000 kPa, such as between 2500 and 3500 kPa, for example a pressure of about 2800 kPa (which roughly corresponds to 400 pounds per square-inch).

The mix contained in the chamber is defibrated by a sudden release from the chamber to atmospheric pressure, through an orifice of the chamber which suddenly opens (step of releasing to atmospheric pressure S167).

After this step, a fibrous mix is obtained and can be further processed.

Figure 7 is a schematic block diagram representing an example embodiment of the curing step S3 of Figure 2. The curing step S3 designates the succession of operations or steps performed after the resinating step S2 up to obtaining a cured composite material.

An example embodiment of the curing step is briefly described with reference to Figure 7, but the resinated fibrous mix obtained after the resinating step S2 may be processed according to any adequate subsequent sequence of steps known in the prior art.

The curing step S3 represented in Figure 7 comprises a drying step S31, wherein the resinated fibrous mix is dried to a moisture content comprised between 0% and 20%, and preferably between 5% and 10%. Dryer cyclones and a Z-Sifter may be used to perform the drying step. A Z-Sifter cleans the fibres of contaminates before the next step. The dried resinated fibrous mix is then formed into a composite mat (forming step S32). The mat undergoes a pressing step (S33), which may comprise passing the mat through successive presses, such as a cold pre-press and then a hot press. After pressing, the composite material is hardened to its final state.

In optional steps, the composite material is handled and machined to form fibreboards. These steps comprise cooling S34 and sawing S35 the lignocellulosic fibre-based composite material, thereby forming fibreboards.

The described process can for example be used to form high density fibreboard panel (having a density greater than 800 kg/m³), medium density fibreboard or MDF (having a density comprised between 650 kg/m³ and 800 kg/m³), low density fibreboard (having a density comprised between 550 kg/m³ and 650 kg/m³). and ultra-low density fibreboard (having a density of less than 550 kg/m³).

### Examples

In the hereafter described examples, formulated sunflower seed meal pellets were obtained with a device and a process as described with reference to Figure 1.

### Preparation of formulated plant seed pellets

A sunflower meal in a "loose" form (not pelletized), i.e. in the form of a "coarse powder", provided by SAIPOL (France) was used.

This (loose) meal corresponds to the state of the seed meal before being pelletized according to SAIPOL's common processes (e.g. to form pellets used for animal feed).

In other words, this meal is the product resulting from the oil extraction from the seed, by pressing and extraction by a solvent, namely hexane. This sunflower meal has a dry content of 94.6% wt, an oil content of 1.2% wt and a protein content of 36.6% wt.

Various additives have been considered to be added with the plant seed meal (in particular the above described sunflower meal), in particular urea, wheat gluten concentrate, soybean protein isolate and water.

Technical grade granules of urea containing 46% wt nitrogen were supplied by Yara (Paris La Defense, France). The wheat gluten was supplied by Ekibio (Peaugres, France) as powder with a protein content of 76% (dry matter). The soybean protein isolate was provided by Efos (Freiburg, Germany) as powder with a minimum protein content of 90% (dry matter).

Tape water was used to adjust the humidity level of the unpelletized formulation to facilitate the process. Water acts as a plasticizer promoting the formation of pellets. Moisture of the unpelletized formulation (sunflower plant seed meal in loose form with or without any additive) was in that respect adjusted between 10% and 25%, preferentially around 12-15%, before the pelletization step to provide good cohesion of formed pellets and to target a residual moisture for formulated plant seed meal pellets between 8% and 25%, preferentially between 8% and 15%.

These raw materials were weighted in a plastic drum. The first step. consists in the addition of all solid ingredients in the plastic drum according to the considered recipe. When all solid raw materials are weighted the drum is shaken for 1 min to homogenize the solid product. When the mix looks homogeneous, liquid components are added and the drum is shaken again for 1 min until the ingredients are homogeneously mixed.

Urea could not be directly added in granule form in the mixture but can be added according to one of the following ways. The urea can be solubilized in the water used to adjust the mixture content. Urea can also be added as powder. This requires urea granules to be grinded.

In the tests performed by the Applicant, the urea was added by solubilization in tape water.

The (unpelletized) formulations used to form pellets are reported in the following table.

**Table 2- Composition of formulations used for the pelletization step for the obtention of pellets**

| | **Composition of formulation (w/w)** | |
|---|---|---|
| **Formulation 1** | *Sunflower meal* | |
| Sunflower | 10 0% | |
| **Formulation2** | *Sunflower meal* | *Wheat Gluten* |
| Sunflower/wheat gluten mixture | 95% | 5% |
| | 90% | 10% |
| | 80% | 20% |
| **Formulation 3** | *Sunflower meal* | *Soy protein isolate* |
| Sunflower/soy protein isolate mixture | 95% | 5% |
| | 90% | 10% |
| | 80% | 20% |
| **Formulation 4** | *Sunflower meal* | *Urea* |
| Sunflower/urea mixture | 85% | 15% |

Formulation 1 was thus used to produce non-formulated (non-additivated) sunflower seed meal pellets (*i.e.,* no additive was added to the sunflower seed meal before palletization), for comparison with formulations 2-4 used to produce formulated (additivated) sunflower seed meal pellets.

The pelletizer mill used was supplied by CISSONIUS (Cissonius GmbH, Germany). This pelletizer mill is a PP200 pellet press rated at 7,5kW.

This pellet press was used with a 200mm diameter perforated disc having 6mm die holes.

The unpelletized formulation is introduced in the feeder of the machine. The formulation is then forced through the holes of the disc die thanks to two rollers.

The pressure applied by the rollers is adjusted thanks to pressure adjustment screws.

The length of the pellets is adjusted thanks to a knife setting. The knife is positioned below the perforated disc just before the outlet.

During pelletization; the unpelletized formulation is introduced gradually in the pellet mill feeder with an input rate as close as possible to the pellet output rate.

As described with reference to Figure 1, the pelletization induces a temperature increase that can be controlled by the initial moisture content of the formulation to be pelletized.

The moisture content is adjusted between 10% and 25%, preferentially around 12-15%. This aims to control the outlet temperature of the pellets between 50 and 90°C, preferentially between 70-80°C.

For the hereafter detailed tests, the moisture content was adjusted to 12.5%. This resulted in a pellet temperature at the outlet of the pellet mill comprised between 75°C and 80°C.

A too high pelletizing temperature must be avoided as it could induce the thermal decomposition of material and alter its further properties.

After pelletization, the product is stored a in 10L plastic drum kept opened for cooling during 24 hours at room temperature. The residual moisture content is measured before drum sealing.

Moisture content of the formulated plant meal pellets as previously described was comprised between 9% and 12%.

### MDF Board manufacturing

Wood chips used in the examples described below are made from pine from South-east Germany.

UF resin used as reference was Kaurit 340S with 66% wt solid, purchased from BASF.

Ammonium sulphate with solid content of 35 % wt was used as catalyst for UF resin.

The polyamidoamine-epichlorohydrin (PAE CA 1920) resin was purchased from Solenis (Wilmington, Delaware) and used as received. The PAE CA1920 resin is an aqueous solution with a polymer solids content of 20% wt.

The water repellent used was a wax in emulsion hydrowax 138 with a solid content of 60% wt purchased from Sasol.

### Board (medium-density fibreboard) preparation, according to example embodiments of the present invention, with formulated plant seed pellets and PAE resin

Formulated sunflower seed meal pellets were first mixed with wood chips, thus forming a mix of lignocellulosic material and formulated plant seed pellets Formulated sunflower seed meal pellets having the above-described formulations (i.e., formulation 2, formulation 3 and formulation 4) were tested.

For control, as a comparative sample, non-formulated sunflower meal pellets (i.e., according to formulation 1 as above described) were also mixed with wood chips.

The amount of pellets was calculated based on oven dry wood (*i.e.* based on the solid material present in the wood).

The mix lignocellulosic material and formulated plant seed pellets was steamed in a steaming bin to a temperature of 80°C to 95°C.

The steamed mix of lignocellulosic material and formulated plant seed pellets was transported to the pre-heater (Andritz) via an integrated conveyor. A continuously operating plug screw with integrated drainage (MSD-Multi Screw Device) for squeezing water out of the mix of the steamed lignocellulosic material and plant seeds conveyed the material to the pre-heater.

The material was fed into the pre-heater (or cooker) using an Andritz apparatus, at 9 bar pressure with constant throughput which led to a retention time in the pre-heater of 3 to 4 min. After plasticization (at a temperature around 160 °C in the pre-heater which makes the fibres soft and easier to separate) the material was continuously fed through a discharge screw into the refiner in which it was processed, *i.e.* defibrated according to a thermo-mechanical process (*i.e.* an Asplund type process).

An emulsion of wax was applied through the feed screw of the refiner.

From the refiner, the mix of defibrated lignocellulosic material and defibrated formulated plant seed pellets, called "fibrous mix", was discharged via the tangential outlet into the blow line where the PAE resin was injected separately. At the exit of the blow line, there is thus formed a mixture comprising the fibrous mix and the resin (composite mixture).

The amount of PAE resin was calculated to have several given percentages, in weight, of solid from the resin, based on oven-dry wood.

After processing in the blow line, the resinated wood was flash-dried at 100 °C, using a Schenkmann & Piel apparatus. The moisture content of the resinated fibres after the flash-drying step varied between 6.3 % and 7.8 %. The fibres were then transported to the mat building process.

After this process each mat (having thicknesses comprised between 390 and 450 mm) was prepressed in a separate single daylight press at room temperature with a pressure of 1 N/mm² for 60 s.

Afterwards each mat was pressed in a single daylight hot press with a target density of 740 kg/m³ and a target thickness of 11.5 mm. The boards were pressed on a HOFER hot press. The press temperature was 210 °C and the press time factor was of 10 s/mm or 15s/mm.

### Board preparation with wood and UF resins (comparative example)

UF resins are the resins currently used for manufacturing MDF at industrial scale.

A process identical to the above described process was performed on wood chips (instead of on a mix of lignocellulosic material and formulated plant seed pellets), up to the discharge of a defibrated material (*i.e.* defibrated wood instead of a mix of defibrated lignocellulosic material and defibrated formulated plant seed pellets) from the refiner to the blow line.

UF resin was first mixed with 2% in weight of ammonium sulfate as catalyst based on dry UF. The UF resin loading was calculated to have 15 % in weight of solid from the binder (resin and catalyst) in the total solid weight, based on oven-dry wood. The liquid UF and ammonium sulfate resin was applied directly after the refiner outlet into the blow line. After processing in the blow line, the resinated material was dried and pressed as above explained with reference to the preparation of board according to example embodiments of the present invention. The moisture content of the resinated fibres after the drying step was 7.2%.

### Board characterization

European standards were used to measure Internal Bond strength (IB) (EN 319:1993), and dimensional stability (swelling; EN 317:1993). Prior to the tests, the samples were conditioned in a room at 20°C and 65 % relative humidity. All specimens were characterized using an Imal apparatus.

To determine the internal bond strength (IB) and the thickness swell (TS), six test specimens with nominal dimensions of 50.0 x 50.0 x 11.5 mm were cut from test panels for each condition. The IB was calculated and recorded after each specimen was tested to failure. The TS that is defined as the percentage increase in the thickness of a specimen after immersing in water for 24 hours at room temperature were measured, before and immediately after the 24 hours of immersion. A low TS reflects a high water resistance.

### Results and discussion

The influence of partial substitution of sunflower seed meal by the previously described additives on MDF board properties was investigated and compared with MDF board properties made from only sunflower meal based formulation (formulation 1). The same amount of pellets at 12% in weight of the total solid weight in the composite mixture, based on oven dry wood, has been used for all formulations described above. Same amount of PAE resin of 1,6% (w/w) was considered for all tested formulations. For comparison, MDF board manufactured with an UF resin was also tested. The results are shown below in Table 3.

**Table 3 : Mechanical properties of MDF manufactured with biobased adhesives formulated from pellets (MDF manufactured using 12% of pellets in weight based on dry wood, and 1,6%(w/w) of PAE resin) and comparison with state of art MDF manufactured with UF resin.**

| | **Composition of formulation (w/w)** | | **Pressing time (s/mm)** | **Internal bond strength (N/mm²)** | **Thickness swelling (%)** |
|---|---|---|---|---|---|
| **UF** | | | 10 | 0.66 | 22.2 |
| | | | 15 | 0.77 | 19.2 |
| **Formulation 1 with PAE** | *Sunflower meal* | | | | |
| | 100 % | | 10 | 0,60 | 17,1 |
| | | | 15 | 0,76 | 14,6 |
| **Formulation 2 with PAE** | *Sunflower meal* | *Gluten* | | | |
| | 95% | 5% | 10 | 0,53 | 15,9 |
| | | | 15 | 0,73 | 16,0 |
| | 90% | 10% | 10 | 0,52 | 15,5 |
| | | | 15 | 0,84 | 14,9 |
| | 80% | 20% | 10 | 0,43 | 19,7 |
| | | | 15 | 0,72 | 15,9 |
| **Formulation 3 with PAE** | *Sunflower meal* | *Soy protein isolate* | | | |
| | 95% | 5% | 10 | 0,64 | 17,2 |
| | | | 15 | 0,81 | 14,2 |
| | 90% | 10% | 10 | 0,59 | 15,8 |
| | | | 15 | 0,75 | 14,9 |
| | 80% | 20% | 10 | 0,67 | 15,2 |
| | | | 15 | 0,64 | 13,5 |
| **Formulation 4 with PAE** | *Sunflower meal* | *Urea* | | | |
| | 85% | 15% | 10 | 0,67 | 14,5 |
| | | | 15 | 0,77 | 13,6 |

MDF boards prepared from non-formulated sunflower meal pellets (formulation 1) and formulated sunflower meal pellets (formulations 2-4) have good mechanical performances compared to the reference MDF boards prepared with UF resin.

It can be noticed that the partial substitution of sunflower meal by additives such as wheat gluten concentrate and soy protein isolate until 20% (w/w) makes it possible to keep the MDF mechanical properties similar to the mechanical properties of the MDF boards obtained with non-formulated sunflower meal pellet and a PAE adhesive.

These results show that the combination of plant seeds and additives provided in the form of formulated plant seed pellets can be used to produce a lignocellulosic fibre-based composite material. Lignocellulosic fibre-based composite boards can be obtained, that meet required properties, in particular mechanical properties, for example based on industrial standards for such boards (0.6 N/mm² for IB and 15% for TS).

These results also show an opportunity to reduce the quantity of sunflower meal in the composite material, by replacing part of the sunflower meal with one or more other plant based material, such as concentrated or isolated plant proteins. The composite material properties can be maintained despite such substitution.

Similar results were obtained by replacing a part of the sunflower meal by 15% (w/w) of urea (Formulation 4). The mechanical properties of the boards obtained with this formulation were similar to the mechanical properties of the boards obtained with non-formulated sunflower pellets and PAE adhesive, and even better in particular with a pressing time of 10 s/mm with a thickness swelling of 14,5% vs 17,1%.

Therefore, formulated plant seed pellet, based on a protein seed meal and additives can successfully be used in a process according to the invention to produce lignocellulosic fibre-based composite material having high performances.

### Industrial application

The present invention provides a process for the manufacture of a lignocellulosic fibre-based composite material, which has costs and environmental friendliness advantages (in particular as it saves water and energy) over the comparable processes known in the prior art. A preferred application of such a process is the manufacture of fibreboards, such as MDF. Thanks to the manufacturing process according to the invention using defibrated formulated plant seed pellets as source of protein and fibres, provided in a fibrous mix of defibrated lignocellulosic material and defibrated formulated plant seed pellets, the fibre-based composite material may have enhanced mechanical properties.

The formulated plant seed pellets comprises one several plant meals and one or several additives. This can enhance the properties of the produced composite material and/or makes it possible to use several plants species depending on their availability (local or temporal availability).

The use of a mix of defibrated lignocellulosic material and defibrated formulated plant seed pellets has not only economic advantages, environmental advantages, advantages in terms of process simplicity (the additives are brought directly by the formulated pellets), but also advantages with respect to the properties of the final product.

## Claims

1. Process for the manufacture of a lignocellulosic fibre-based composite material comprising the steps of:
• obtaining a fibrous mix (S1) comprising defibrated lignocellulosic material and defibrated formulated plant seed pellets; wherein the formulated plant seed pellets comprise a plant seed and at least one additive;
• blending the fibrous mix with a resin (S2) to form a composite mixture; and
• curing (S3) the composite mixture, thereby forming the lignocellulosic fibre-based composite material.

2. Process according to Claim 1, wherein the step of obtaining a fibrous mix (S1) comprises:
• providing a lignocellulosic material and providing formulated plant seed pellets (S11);
• mixing (S15) the lignocellulosic material and the formulated plant seed pellets, thereby obtaining a mix of lignocellulosic material and formulated plant seed pellets ; and
• defibrating (S16) the mix of lignocellulosic material and formulated plant seed pellets.

3. Process according to Claim 2, wherein the step of defibrating (S16) the mix of lignocellulosic material and formulated plant seed pellets comprises a step of steaming (S161,S165) the mix of lignocellulosic material and formulated plant seed pellets before defibration by a thermo-mechanical process or a pressure release based process.

4. Process according to any one of the preceding Claims, wherein the composite mixture comprises:
- an amount of defibrated lignocellulosic material ranging from 40% to 99%, preferably from 50% to 95%, and more preferably from 80% to 95%, for example 84% in weight of the total dry matter of the composite mixture, and
- an amount of defibrated formulated plant seed pellets ranging from 1% to 60%, preferably from 5% to 40%, and more preferably from 5% to 20% in weight of the total dry matter of the composite mixture, and an amount of resin ranging from 0.1% to 20%, preferably from 0.3% to 5%, and more preferably from 0.5% to 3%, for example from 0.9% to 1.6% in weight of the total dry matter of the composite mixture.

5. Process according to any one of the preceding Claims, wherein the step of curing the composite mixture (S3) comprises the steps of:
- drying (S31) the composite mixture to a moisture content comprised between 0% and 20%, and preferably between 5% and 10%, forming (S32) the dried composite mixture into a mat,
- pressing (S33) the mat to obtain the lignocellulosic fibre-based composite material.

6. Process for the manufacture of a fibreboard, comprising a process according to any one of the preceding Claims, wherein it further comprises the steps of cooling (S34) and sawing (S35) the lignocellulosic fibre-based composite material, thereby forming fibreboards.

7. Process according to any one of the preceding Claims, wherein the lignocellulosic material is wood, corn stover, coconut husk, cotton stalk, flax, grass, hemp, kenaf, wheat straw, bagasse, oil palm trunks, bamboo, or a mix of two or more thereof, preferably wood.

8. Process according to any one of the preceding Claims, wherein the fibrous mix comprises at least 40%, preferably at least 60%, more preferably 80% w/w on dry matter of fibres.

9. Process according any one of the preceding claims, wherein the formulated plant seed pellets are plant seed meal pellets.

10. Process according any one of the preceding claims, wherein the formulated plant seed pellets comprise one or several of the following additives:
- a formaldehyde scavenging agent,
- an antimicrobial agent,
- an antibacterial agent,
- a fungicide,
- a preservative,
- a pigment,
- an agent improving moisture resistance or a water-repellent agent,
- a fire-resistant or fire retardant agent,
- a catalyst,
- cellulose nanoparticles,
- a pH modulator,
- a wood preservative,
- a protein,
- a carbohydrate,
- a polyol,
- a sugar alcohol.

11. Process according to claim 9, wherein the formulated plant seed pellets comprise additives in a range from 0.01% (w/w) to 50% (w/w), preferably from 0.01% (w/w) to 30% (w/w), more preferably from 0.01% (w/w) to 20% (w/w).

12. Process according to any one of the preceding Claims, wherein the plant seeds used in the formulated plant seed pellets are seeds of plants belonging to one or several of the following families:
- *Arecaceae* such as:
▪ *Attalea,*
▪ *Elaeis,* and
▪ *Carthamus,* such as *Carthamus tinctorius,*
- *Asteraceae* such as:
▪ *Helianthus,* such as *Helianthus annuus,*
- *Brassicaceae* such as:
▪ *Brassica,* such as *Brassica napus, Brassica juncea, Brassica nigra, Brassica rapa, Brassica carinata,* and
▪ *Camelina* such as *Camelia Sativa,*
- *Cannabaceae* such as:
▪ *Cannabis,* such as *Cannabis sativa,*
- *Fabaceae* such as:
▪ *Glycine,* such as *Glycine max*
▪ *Lupinus,* and
▪ *Pisum,* such as *Pisum sativum*
- *Linaceae* such as:
▪ *Linum* such as *Linum usitatissimum,*
- *Malvaceae* such as:
▪ *Gossypium* and
- *Poaceae such as* :
▪ *Zea mays,*
▪ *Oryza sativa, Oryza glaberrima*
▪ *Eleusine coracana*
▪ *Triticum aestivum, Triticum durum*
▪ *Hordeum vulgare*
▪ *Sorghum bicolor,*
▪ *Panicum miliaceum*
▪ *Avena sativa.*

13. Process according to any one of the preceding Claims, wherein the resin is selected from:
- a polyamidoamine-epichlorohydrin (PAE) resin, a polyalkylenepolyamine-epichlorohydrin resin, an itaconic acid-based polyamidoamine-epichlorohydrin resin and/or an amine polymer-epichlorohydrin resin,
- an epoxy resin such as bisphenol A diglycidyl ether epoxy resin,
- isocyanate resin,
- urea-formaldehyde resin, melamine-formaldehyde resin, melamine-urea-formaldehyde resin, phenol-formaldehyde resin, resorcinol-formaldehyde resin, other resins based on formaldehyde or on another aldehyde such as furfural, propanal, butyraldehyde, succinaldehyde, glutaraldehyde, dimethoxyethanal, glyoxylic acid, glycolaldehyde, vanillin,
- a polyurethane-based resin,
- a polyacid-based resin such as based on maleic anhydride or acetic acid,
- an acrylate-based or methacrylate-based resin such as poly(methyl methacrylate),
- ethylene vinyl acetate (EVA), ethylene-co-vinylacetate-co-acrylic acid, ethylene-co-vinylacetate-co-methacrylic acid, ethylene-co-vinylacetate-co-vinylalcohol, carboxylated vinyl acetate-ethylene copolymers, ethylene vinyl alcohol (EVOH), polyvinylalcohol, polyvinylbutyral-co-vinylalcohol, polyvinylacetate-co-vinylalcohol.

14. A formulated plant seed pellet, composed of:
- sunflower meal as plant seed meal;
- between 5% and 20%, such as 5%, 10%, 15% or 20% of one of wheat gluten concentrate, soy protein isolate, and urea, or a mixture thereof;
- optionally, one or more other additives in a range from 0.01% to 20% (w/w).

15. A fibrous mix comprising lignocellulosic material fibres and defibrated formulated plant seed pellets, wherein the weight ratio of lignocellulosic material to defibrated formulated plant seed pellets is comprised between 40:60 and 99:1, and preferably between 80:20 and 95:5, such as 88:12.

16. A lignocellulosic fibre-based composite material comprising a fibrous mix according to Claim 15 and a resin, the fibrous mix forming a reinforcement and an adhesive for said lignocellulosic fibre-based composite material and the resin, in a cured form, forming or being part of a matrix of said lignocellulosic fibre-based composite material.

17. A fibreboard panel made of a lignocellulosic fibre-based composite material according to Claim 16.
